# EUROPÄISCHE PATENTSCHRIFT

(11) **EP 3 167 540 B1**
(45) Veröffentlichungstag und Bekanntmachung des Hinweises auf die Patenterteilung: **15.04.2020**
(21) Anmeldenummer: 15722171.4
(22) Anmeldetag: 08.05.2015
(51) Int. Cl.: H02K 15/04, H02K 3/12, H02K 15/06

(54) **VERFAHREN ZUM HERSTELLEN EINER ELEKTRISCHEN MASCHINE MIT FORMSPULEN SOWIE ELEKTRISCHE MASCHINE UND HERSTELLUNGSWERKZEUG**
METHOD FOR PRODUCING AN ELECTRICAL MACHINE USING PRE-FORMED COILS AND ELECTRICAL MACHINE AND PRODUCTION TOOL
PROCÉDÉ DE FABRICATION D'UNE MACHINE ÉLECTRIQUE COMPORTANT DES BOBINES FORMÉES ET MACHINE ÉLECTRIQUE ET OUTIL DE FABRICATION

(30) Priorität: 10.07.2014 DE 102014213435
(43) Veröffentlichungstag der Anmeldung: 17.05.2017
(73) Patentinhaber: Robert Bosch GmbH, 70442 Stuttgart (DE)
(72) Erfinder: KNAPPENBERGER, Uwe, 75417 Muehlacker (DE); KUDLEK, Alexander, 31199 Diekholzen (DE); HEUSER, Patrick, 70372 Stuttgart (DE)
(86) Internationale Anmeldenummer: PCT/EP2015/060247
(87) Internationale Veröffentlichungsnummer: WO 2016/005076

(56) Entgegenhaltungen:
- EP-A2- 1 324 470
- WO-A2-2012/072754
- DE-A1-102012 203 300
- DE-T5-112011 100 889
- JP-A- 2000 069 729
- US-A1- 2005 166 393

## Beschreibung

### Technisches Gebiet

Die Erfindung betrifft elektrische Maschinen, insbesondere Herstellungsverfahren für elektrische Maschinen. Weiterhin betrifft die vorliegende Erfindung Herstellungsverfahren zum Herstellen von elektrischen Maschinen mit offenen Formspulen sowie ein Herstellungswerkzeug zum Bereitstellen von Steckwicklungen zum Aufbau einer elektrischen Maschine.

### Stand der Technik

Elektrische Maschinen weisen üblicherweise im Stator und/oder im Rotor Wicklungen auf, die zum Betreiben der elektrischen Maschine in geeigneter Weise bestromt werden.

Bei der Herstellung derartiger Maschinenkomponenten besteht neben dem Bewickeln der Statorzähne des Stators oder der Ankerpole des Rotors durch verschiedene Wicklungstechniken auch die Möglichkeit, Wicklungen aus vorgeformten, U-förmigen, offenen Formspulen auszubilden. Solche Formspulen können in die Nuten eines Statorkörpers bzw. eines Rotorkörpers über deren jeweilige Stirnseite in axialer Richtung eingesteckt werden. Dabei muss vor allem darauf geachtet werden, dass die die beiden Leiterschenkel verbindenden Leiterbögen der Formspulen in geeigneter Weise miteinander verschränkt sind, um das vorgegebene Wicklungsschema einzuhalten.

Das Verschränken von Formspulen erfolgt in der Regel durch Auseinanderziehen von parallelen Leiterschenkeln der Formspulen, bis diese einen Abstand voneinander aufweisen, der dem Abstand entspricht, in dem diese in der herzustellenden elektrischen Maschine vorliegen. Die Herstellung einer herkömmlichen elektrischen Maschine erfolgt üblicherweise durch ein Ausbilden und Verschränken der Formspulen sowie deren anschließendes Einsetzen in Nuten oder Taschen eines Stator- oder Rotorkörpers.

Aus der Druckschrift DE 10 2012 2003300 A1 ist ein Verfahren zur Herstellung einer Phasenwicklung eines Stators für eine elektrische Maschine bekannt. Dabei werden Leiterelemente U-förmig gebogen und in einer Schränkvorrichtung verschränkt. Anschließend werden die Formspulen mit ihren Leiterschenkeln in den Nuttaschen des Stators angeordnet und die Endabschnitte der Leiterschenkel auf der den Leiterbögen abgewandten Seite im Stator ebenfalls miteinander verschränkt und in geeigneter Weise elektrisch verbunden. Das Verschränken erfolgt mithilfe eines Schränkwerkzeugs, das mit mehreren Formspulen bestückt wird, so dass die Leiterbögen gleichzeitig verformt werden. Auf diese Weise können mehrere Windungen einer Statorspule mithilfe von Formspulen realisiert werden.

Aus der WO2012/072754A2 ist ein Verfahren zur Herstellung einer Wicklung für eine Maschinenkomponente bekannt mit den Merkmalen des Oberbegriffs nach Anspruch 1. Auch aus der DE102012203300A1 und der US2005/0166393A1 sind Verfahren zur Herstellung einer Wicklung in einem Verschränkungswerkzeug bekannt.

Ziel der Verschränkung ist es, die Leiterbögen der Formspulen möglichst platzsparend an einer Stirnseite der Maschinenkomponente, d. h. des Statorkörpers bzw. des Rotorkörpers, anzuordnen. Insbesondere bei Motortopologien, bei denen in einer Komponentennut eine ungerade Anzahl von Leiterschenkeln der Steckwicklungen vorgesehen sind, lässt sich das obige Verfahren nicht mehr anwenden. Durch ein Wicklungsschema mit einer ungeraden Anzahl von Leitersträngen in einer Nut werden in der Regel unregelmäßige Formspulen mit individuell geformten Leiterbögen erhalten, um eine optimale Platzausnutzung im Bereich des Wicklungskopfes zu erreichen. Diese Formspulen müssen daher mit einer entsprechenden Anzahl unterschiedlich eingestellter Verschränkungswerkzeuge hergestellt werden. Weiterhin führt die oben beschriebene Art der Verschränkung bei einer ungeraden Anzahl von Leitersträngen zu nicht vollständig ausgefüllten Nuten, wodurch der Nutfüllfaktor, der ein Maß für die Ausnutzung eines Querschnitts der Nut durch Leiterstränge von Wicklungen angibt, verschlechtert wird.

Es ist daher Aufgabe der vorliegenden Erfindung, ein Verfahren zur Herstellung einer elektrischen Maschine mit offenen Formspulen zu vereinfachen und insbesondere eine Verschränkung der Leiterbögen im Wicklungskopf möglichst platzsparend zu realisieren. Es ist weiterhin Aufgabe der vorliegenden Erfindung, ein Herstellungswerkzeug zum Herstellen einer Spulenwicklung für eine elektrische Maschine zur Verfügung zu stellen.

### Offenbarung der Erfindung

Diese Aufgabe wird durch das Verfahren zur Herstellung einer Wicklung für eine Maschinenkomponente einer elektrischen Maschine gemäß Anspruch 1 gelöst.

Weitere Ausgestaltungen sind in den abhängigen Ansprüchen angegeben.

Gemäß einem ersten Aspekt ist ein Verfahren zur Herstellung einer Wicklung für eine Maschinenkomponente vorgesehen, das die folgenden Schritte umfasst:
- Anordnen von mehreren im Wesentlichen U-förmigen Formspulen in einem Verschränkungswerkzeug;
- Umformen der mehreren Formspulen durch relatives Bewegen von Werkzeugteilen des Verschränkungswerkzeugs, wobei sich der Abstand von zueinander parallelen Leiterschenkeln vergrößert und wobei das Umformen so erfolgt, dass Leiterschenkel von verschiedenen Formspulen in radialer Richtung zueinander angeordnet sind; und
- Verschieben zumindest eines Teils der radialen Anordnungen von Leiterschenkeln in einer radialen Richtung, so dass alle radialen Anordnungen von Leiterschenkeln ringförmig angeordnet sind.

Eine Idee des obigen Herstellungsverfahrens für eine aus Formspulen gebildete Wicklung für eine Maschinenkomponente einer elektrischen Maschine besteht darin, dass alle Formspulen gleichzeitig miteinander verschränkt und so geformt werden, dass das Paket aus verschränkten Formspulen als Wicklung in Nuten einer Maschinenkomponente eingesetzt werden kann. Während bei Wicklungsschemen mit einer geraden Anzahl von Leitersträngen in jeder Nut der Maschinenkomponente eine Verschränkung der Formspulen in einfacher Weise durch ein Verschränkungswerkzeug erreicht werden kann, ist dies bei Wicklungsschemata mit einer ungeraden Anzahl von Leitersträngen (Leiterschenkeln) in einer Nut nicht ohne weiteres möglich, ohne dass zumindest in einem Teil der Nuten Leerräume verbleiben.

Gemäß einem weiteren Aspekt ist ein Verschränkungswerkzeug zum Herstellen einer Wicklung einer elektrischen Maschine mit Formspulen vorgesehen, umfassend:
- ein erstes zylindrisches Werkzeugteil mit radial nach innen gerichteten ersten Aufnahmeöffnungen;
- ein zweites zylindrisches Werkzeugteil, das zu dem ersten Werkzeugteil konzentrisch und relativ verdrehbar ist und radial nach außen gerichtete zweite Aufnahmeöffnungen aufweist; und
- eine Einrichtung zum Verschieben von radialen Anordnungen von in den Aufnahmeöffnungen befindlichen Leiterschenkeln in einer radialen Richtung, wenn die ersten und zweiten Aufnahmeöffnungen zueinander ausgerichtet sind.

Das Verschränken erfolgt in der Regel mithilfe des obigen Verschränkungswerkzeugs, das zwei gegeneinander bewegliche, konzentrische, zylinderförmige Werkzeugteile aufweist. Die Werkzeugteile weisen in Umfangsrichtung verteilte durchgehende Aufnahmeöffnungen auf, die radial zueinander ausgerichtet werden können. In die radial zueinander ausgerichteten Aufnahmeöffnungen werden die U-förmigen Formspulen eingesetzt, insbesondere so, dass die Anordnungsrichtung der Leiterschenkel der Formspulen radial ausgerichtet ist. Durch Verdrehen der Zylinder relativ gegeneinander werden die weiteren Leiterschenkel der Steckwicklungen auseinander gezogen und die diese verbindenden Leiterbögen miteinander verschränkt.

Bei der Auslegung von elektrischen Maschinen ist es wichtig, eine geforderte Ziel-Performance, wie Drehmoment und Leistung, über der Drehzahl zu erreichen. Dabei ergeben sich oftmals Wicklungsschemata, die ungerade Anzahlen von Leitersträngen in einer, mehreren oder allen Nuten der Maschinenkomponente aufweisen. Solche Wicklungsschemata sind jedoch in der Praxis bislang nur schwierig mit Formspulen zu realisieren.

Das obige Verfahren sieht daher vor, eine Wicklung für eine Maschinenkomponente einer elektrischen Maschine mithilfe des obigen Verschränkungswerkzeugs auszubilden. Das Verschränkungswerkzeug weist mindestens zwei konzentrisch angeordnete, relativ zueinander bewegliche, zylinderförmige Werkzeugteile auf. Darin werden nun alle für die Wicklung benötigten Formspulen eingesetzt. Die einzelnen Formspulen werden dabei im Wesentlichen mit ihren Leiterschenkeln in zwei Aufnahmeöffnungen von zwei verschiedenen der Werkzeugteile eingesetzt, insbesondere so, dass die Leiterschenkel in einer radialen Richtung ausgerichtet sind. Das heißt die Formspulen werden mit ihren Leiterschenkeln in Aufnahmeöffnungen eingesetzt, die anfänglich in vorzugsweise radialer Richtung zueinander ausgerichtet sind.

Gemäß einer Ausführungsform können die Formspulen in nutförmigen Aufnahmeöffnungen in den Werkzeugteilen des Verschränkungswerkzeugs angeordnet werden, so dass ein erster der Leiterschenkel der Formspulen in einer ersten Aufnahmeöffnung eines ersten der Werkzeugteile und ein zweiter der Leiterschenkel der Formspulen in einer zweiten Aufnahmeöffnung eines zweiten der Werkzeugteile angeordnet werden, wobei das Umformen durch Bewegen der Werkzeugteile durchgeführt wird, bis die nutförmigen Aufnahmeöffnungen einander in radialer Richtung gegenüberliegen und Durchgangsöffnungen mit den darin befindlichen radialen Anordnungen der Leiterschenkel ausgebildet werden.

Die Aufnahmeöffnungen der Werkzeugteile sind nutförmig als Aufnahmenuten ausgebildet, deren Nutöffnungen bei jeweils zwei Werkzeugteilen zueinander gerichtet sind. Die nutförmigen Aufnahmeöffnungen verlaufen im Wesentlichen in radialer Richtung und bilden so an einer Aufnahmeposition einander gegenüberliegend die Durchgangsöffnung mit in radialer Richtung länglichem Querschnitt.

Insbesondere das Verschieben der Formspulen in den nutförmigen Aufnahmeöffnungen der Werkzeugteile des Verschränkungswerkzeugs kann durch Ausüben von radialem Druck auf die Leiterschenkel nach radial innen oder radial außen erfolgen, so dass die radialen Anordnungen der Leiterschenkel an eine radial innere bzw. radial äußere Begrenzung der Durchgangsöffnung gedrückt werden.

Nach dem Verschränken liegen sich die entsprechenden Aufnahmeöffnungen ebenfalls zueinander ausgerichtet gegenüber. Um eine zum Einsetzen in eine Maschinenkomponente geeignete Wicklung zu erreichen, werden daher die Leiterschenkel der verschränkten Formspulen, die sich in den Durchgangsöffnungen befinden, in radialer Richtung nach innen oder außen an den Nutboden der jeweiligen Aufnahmenut gedrückt. Auf diese Weise wird erreicht, dass die in radialer Richtung ausgerichteten Leiterschenkel entlang einer zu dem Verschränkungswerkzeug konzentrischen Anordnung angeordnet werden.

Weiterhin weist das Verschränkungswerkzeug durch Aufnahmeöffnungen gebildete Aufnahmepositionen mit jeweils einem oder mehreren Aufnahmeplätzen zur Aufnahme eines Leiterschenkels auf, wobei mehrere benachbarte Aufnahmepositionen einen Steckblock bilden und wobei die Steckblöcke zueinander benachbart angeordnet sind, wobei in jedem Steckblock Formspulen in identischer Weise angeordnet werden und mindestens an einer Aufnahmeposition jedes Steckplatzes ein Aufnahmeplatz unbesetzt bleibt.

Es ist vorgesehen, dass die Werkzeugteile des Verschränkungswerkzeugs eine gerade Anzahl von Aufnahmepositionen definieren, von denen die Hälfte mit einer oder mehreren Formspulen bestückt werden. Durch relatives Versetzen der Werkzeugteile um eine Anzahl von Aufnahmepositionen, die einem Ein- oder Vielfachen der Anzahl der mit Formspulen belegten Aufnahmepositionen entspricht, kann nun die Verschränkung durchgeführt werden.

Jeder Steckblock umfasst eine gerade Anzahl von Aufnahmepositionen, wobei bei dem Schritt des Anordnens eine erste Hälfte der Aufnahmepositionen gemäß einem ersten Bestückungsmuster mit einer ersten Anzahl von Leiterschenkeln versehen werden und eine zweite sich daran anschließende Hälfte der Aufnahmepositionen gemäß einem zweiten Bestückungsmuster mit einer zweiten, im Vergleich zur ersten Anzahl geringeren Anzahl von Leiterschenkeln versehen werden.

Es ist außerdem vorgesehen, dass das relative Bewegen der Werkzeugteile des Verschränkungswerkzeugs zum Umformen so durchgeführt wird, dass jede radiale Anordnung von Leiterschenkeln eine ungerade Anzahl von Leiterschenkeln aufweist.

Gemäß einem weiteren Aspekt ist ein Verfahren zur Herstellung einer Maschinenkomponente, insbesondere einer Statoranordnung oder einer Rotoranordnung, für eine elektrische Maschine vorgesehen, das die folgenden Schritte umfasst:
- Herstellen einer Wicklung mit dem obigen Verfahren; und
- Einsetzen der so hergestellten Wicklung in die Maschinenkomponente.

Durch das Verschieben der Leiterschenkel in den in den länglichen Durchgangsöffnungen durch das Verschränken entstandenen Freiraum (Werkzeuglücke) wird den verschränkten Formspulen letztlich die Form und die Anordnung gegeben, die ihrer Anordnung als Wicklung in der Maschinenkomponente der elektrischen Maschine entspricht. Dazu muss die Anordnung der so geformten Formspulen aus dem Verschränkungswerkzeug entnommen und mithilfe eines Spannwerkzeugs in ein Lamellenpaket der Maschinenkomponente eingesetzt werden. Auf diese Weise können komplexe Wicklungsschemata, die zu einer ungeraden Anzahl von Leitersträngen in Nuten von verschiedenen Maschinenkomponenten führen, auch mit Formspulen ausgebildet werden, ohne die Nachteile einer verschlechterten Nutfüllung (Nutfüllfaktor) in Kauf nehmen zu müssen.

Durch die vollständige Übernahme des Pakets von miteinander verschränkten Formspulen in die Maschinenkomponente wird die eingeschränkte Gestaltungsfreiheit eines Herstellungsverfahrens mit einem nacheinander erfolgenden Einsetzen von einzeln geformten Formspulen in die Maschinenkomponenten umgangen. Zudem kann dadurch der Wicklungskopf platzsparender aufgebaut werden.

Weiterhin sind in dem obigen Verschränkungswerkzeug die ersten und die zweiten nutförmigen Aufnahmeöffnungen jeweils zur Aufnahme einer ungeraden Anzahl von Leiterschenkeln von Formspulen ausgebildet, so dass die Aufnahmeöffnungen durch die Leiterschenkel im Wesentlichen vollständig ausfüllbar sind.

Ausführungsformen werden nachfolgend anhand der beigefügten Zeichnungen näher erläutert. Fig.1 bis Fig.6c dienen lediglich dem Verständnis der Erfindung, sind aber ausdrücklich nicht Teil der Erfindung.

Es zeigen:
- Figur 1: eine Querschnittsdarstellung durch eine elektronisch kommutierte elektrische Maschine mit einer mithilfe von Steckwicklungen bewickelten Statoranordnung;
- Figur 2: eine perspektivische Darstellung einer Formspule zum Einsatz in die elektrische Maschine der Figur 1;
- Figur 3: eine schematische Darstellung eines Verschränkungswerkzeugs zum gleichzeitigen Verschränken von mehreren Formspulen;
- Figur 4: ein Flussdiagramm zur Veranschaulichung des Verfahrens zum Herstellen einer Wicklung aus Formspulen mithilfe eines Verschränkungswerkzeugs;
- Figuren 5a bis 5c: schematische Darstellungen von Verfahrensständen eines nicht-erfindungsgemäßen Verschränkungsprozesses zum Herstellen einer Spulenwicklung aus Formspulen;
- Figuren 6a bis 6c: schematische Darstellungen von Verfahrensständen eines nicht-erfindungsgemäßen alternativen Verschränkungsprozesses zur Herstellung einer Spulenwicklung mit einem Leiter pro Nut;
- Figuren 7a bis 7c: schematische Darstellungen von Verfahrensständen eines erfindungsgemäßen Verschränkungsprozesses zur Herstellung einer Spulenwicklung mit fünf Leitern pro Nut; und
- Figuren 8a bis 8c: schematische Darstellungen von Verfahrensständen eines erfindungsgemäßen Verschränkungsprozesses zur Herstellung einer Spulenwicklung für eine elektrische Maschine mit fünf Leitern pro Nut.

### Beschreibung von Ausführungsformen

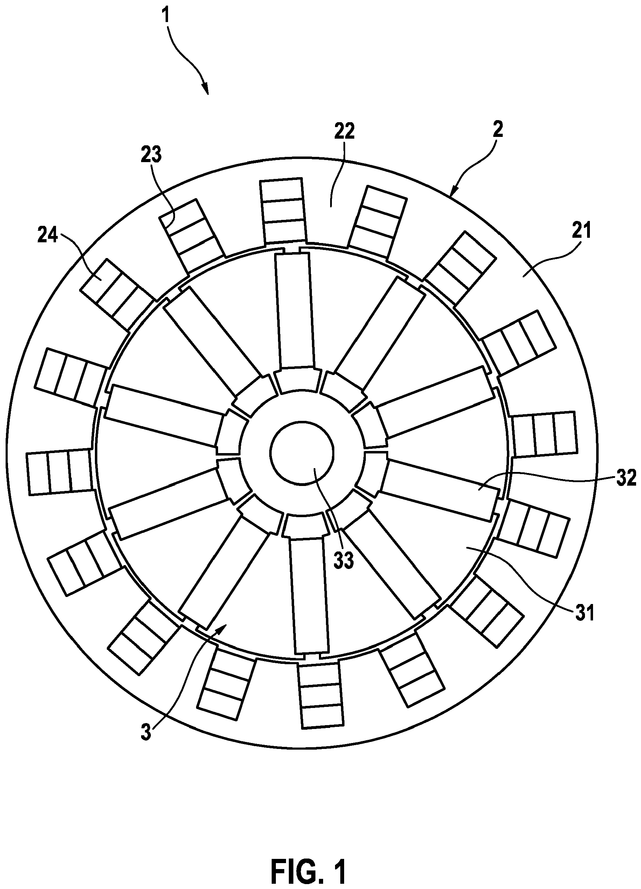

Figur 1 zeigt eine Querschnittsdarstellung durch eine elektrische Maschine 1 mit einer Statoranordnung 2 und einer drehbeweglich im Inneren der kreiszylindrischen Statoranordnung angeordneten Rotoranordnung 3. Die elektrische Maschine 1 ist im gezeigten Ausführungsbeispiel als rotatorische Synchronmaschine mit Innenläufer ausgebildet. Die nachfolgende Beschreibung kann jedoch auch auf andere Arten von elektrischen Maschinen angewandt werden, bei denen eine Maschinenkomponente, insbesondere eine Rotoranordnung und eine Statoranordnung, mit einer Wicklung versehen ist
Die Statoranordnung 2 weist ein kreiszylindrisches Statorjoch 21 auf, von dem in radialer Richtung nach innen Statorzähne 22 abstehen. Die abstehenden Enden der Statorzähne 22 bilden eine kreiszylindrische Ausnehmung, in der die Rotoranordnung 3 angeordnet ist.

Die Rotoranordnung 3 weist Rotorpole 31 auf und ist mit Permanentmagneten 32 versehen, um ein Erregermagnetfeld über die Rotorpole 31 zu bewirken. Die Rotoranordnung 3 ist drehbeweglich über eine gelagerte Rotorwelle 33 positioniert. Im gezeigten Ausführungsbeispiel sind die Permanentmagnete 32 in Speichenanordnung dargestellt, jedoch sind auch andere Anordnungen von Permanentmagneten 32 möglich, um ein Erregermagnetfeld durch die Rotorpole 31 bereitzustellen.

Zwischen den in Umfangsrichtung ausgebildeten Statorzähnen 22 sind Statornuten 23 vorgesehen, die zur Aufnahme von Leitersträngen 24 dienen. Im vorliegenden Ausführungsbeispiel weist die elektrische Maschine 1 drei Leiterstränge 24 pro Statornut 23 auf.

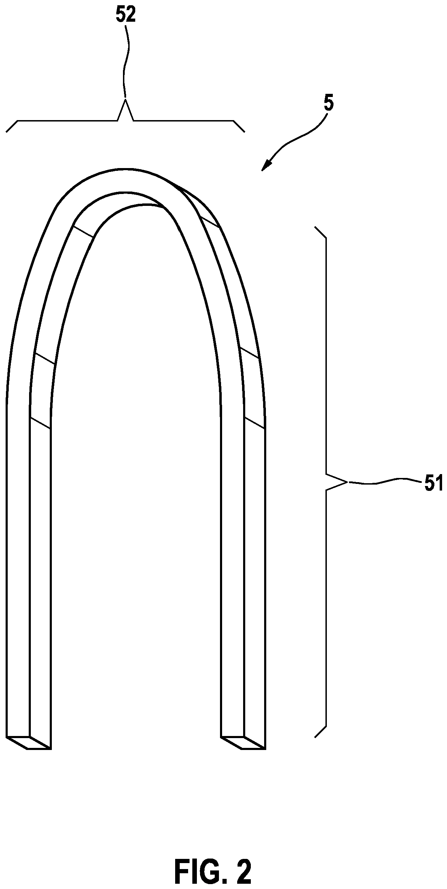

Die Leiterstränge 24 sind, wie in Figur 2 dargestellt, als Leiterschenkel 51 von im Wesentlichen U-förmig ausgebildeten Formspulen 5 ausgebildet. Die Leiterschenkel 51 sind über Leiterbögen 52 miteinander verbunden und erstrecken sich im Wesentlichen parallel zueinander Die Leiterbögen 52 können eine im Wesentlichen beliebige Form annehmen. Die Formspulen 5 sind in der Regel einstückig mit einem rechteckigen Leiterquerschnitt ausgebildet, so dass sie besonders raumfüllend in eine rechteckige Statornut 23 eingesetzt werden können. Es sind jedoch auch andere Querschnitte der Formspule 5 denkbar. Der durch die Formspule 5 gebildete Leiterstrang 24 kann auch mehrere einzelne Leiter enthalten. Das Material der Formspulen 5 kann ein elektrisch gut leitendes Material enthalten, wie z. B. Kupfer oder Aluminium.

In Figur 1 sind die Leiterstränge 24, die den Leiterschenkeln 51 entsprechen, über die sich daran anschließenden Leiterbögen 52 miteinander verbunden und in geeigneter Weise gemäß einem Wicklungsschema mit ihren freien Enden mit einem weiteren freien Ende eines Leiterschenkels 51 und/oder mit einem Außenkontakt/externen Anschluss zum Einprägen von Phasenströmen vorgesehen. Die Leiterbögen 52 der Formspulen 5 liegen an einer Stirnseite der Statoranordnung 2 an und können sich mit Leiterbögen 52 anderer Formspulen 5 überkreuzen.

Es ist wünschenswert, dass der Querschnitt der Leiterschenkel 51 zum einen die Statornuten 23 möglichst vollständig ausfüllt, und zum anderen, dass der Platzbedarf zum Führen der Leiterbögen 52 auf der Seite des Wicklungskopfes der Statoranordnung 2 möglichst gering bleibt.

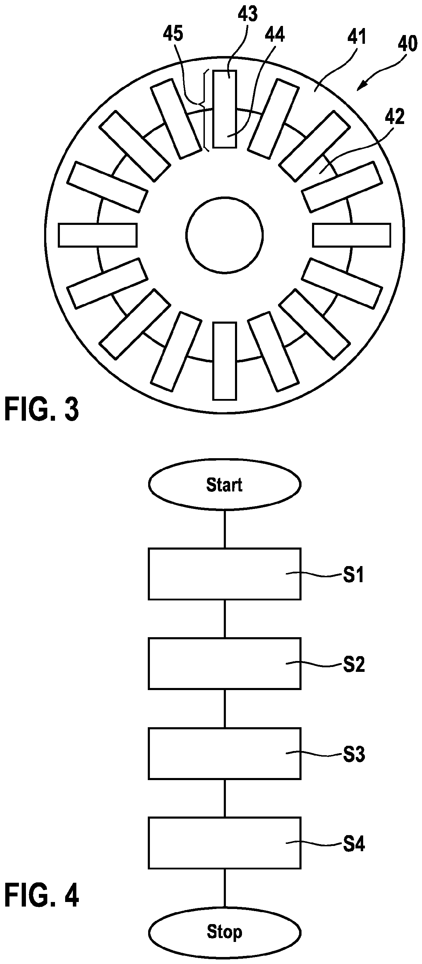

Zum Anpassen der Form der Formspulen 5 werden üblicherweise so genannte Verschränkungswerkzeuge verwendet. Ein solches Verschränkungswerkzeug ist beispielhaft in Figur 3 dargestellt. Das Verschränkungswerkzeug 40 weist mindestens zwei konzentrisch zueinander angeordnete Werkzeugteile 41, 42 auf. Ein erstes der Werkzeugteile 41 umgibt das zweite der Werkzeugteile 42 und weist sich radial nach innen erstreckende erste Aufnahmeöffnungen 43 auf, die sich entlang der axialen Richtung erstrecken. Die ersten Aufnahmeöffnungen 43 bilden so eine Aufnahmenut entlang der axialen Richtung an der inneren Mantelfläche des ersten Werkzeugteils 41 aus. Die Anzahl der ersten Aufnahmeöffnungen 43 entspricht der Anzahl der mit Leitersträngen 24 zu befüllenden Statornuten 23 der Statoranordnung 2.

Das zweite Werkzeugteil 42 ist an seiner äußeren Mantelfläche mit zweiten Aufnahmeöffnungen 44 versehen, die sich nutartig entlang der axialen Richtung erstrecken und in einem ausgerichteten Zustand der Werkzeugteile 41, 42 den ersten Aufnahmeöffnungen 43 gegenüberliegen. Auf diese Weise bilden die ersten und zweiten Aufnahmeöffnungen 43, 44 Paare, die eine in radialer Richtung verlaufende längliche Durchgangsöffnung 45 ausbilden.

Das erste und zweite Werkzeugteil 41, 42 sind relativ zueinander verdrehbar, so dass eingesteckte Formspulen 5, die mit einem Leiterschenkel 51 in einer der ersten Aufnahmeöffnungen 43 und mit ihrem weiteren Leiterschenkel 51 in einer der zweiten Aufnahmeöffnungen 44, insbesondere in der entsprechend gegenüberliegenden zweiten Aufnahmeöffnung 44, eingelegt sind, durch relatives Verdrehen der Werkzeugteile 41, 42 zueinander verformt werden können, so dass sich insbesondere deren Leiterbögen 52 mit einer Länge ausbilden, die dem Abstand der Leiterschenkel 51 in der herzustellenden Wicklung für die elektrische Maschine 1 entspricht.

Insbesondere im Falle von Wicklungsschemata, bei denen in einer Statornut 23 eine ungerade Anzahl von Leitersträngen 24 vorgesehen werden soll, sind bisherige Verfahren zur Verschränkung der Formspulen 5 nicht anwendbar, da in der Regel eine Position in der Statornut 23 von einem Leiter unbesetzt bliebe. Dies resultiert daraus, dass die Verschränkung der Formspulen 5 immer nur durch die Werkzeugteile 41, 42 vorgenommen werden kann, deren Aufnahmeöffnungen 43, 44 sich jeweils auf verschiedenen Radien befinden. Dadurch ergibt sich ein geringer Füllfaktor (Nutfüllfaktor), d. h. ein Verhältnis des Anteils des Leiterquerschnitts in der Statornut 23, der zum Erzeugen des Magnetfelds beiträgt, zu der gesamten Querschnittsfläche der Statornut 23.

Figur 4 zeigt ein Flussdiagramm zur Veranschaulichung des Verfahrens zur Herstellung einer Spulenwicklung für eine Maschinenkomponente einer elektrischen Maschine 1. In Schritt S1 wird ein Verschränkungswerkzeug 40, wie es in Figur 3 beispielhaft dargestellt ist, mit Formspulen 5 bestückt, wobei jede Formspule 5 mit einem Leiterschenkel 51 durch eine der ersten Aufnahmeöffnungen 43 und mit einem weiteren Leiterschenkel 51 durch eine der zweiten Aufnahmeöffnungen 44 gesteckt wird. Anfänglich sind die Formspulen 5 mit Leiterbögen 52 ausgebildet, die im Wesentlichen eine derartige Breite aufweisen, dass die Leiterschenkel 51 in die zueinander benachbarten und einander zugeordneten ersten und zweiten Aufnahmeöffnungen 43, 44 gesteckt werden können. Beim Bestücken des Verschränkungswerkzeugs 40 ist darauf zu achten, dass die Leiterbögen 52 mit ausreichendem Abstand über dem Verschränkungswerkzeug 40 angeordnet sind, so dass bei einem Verformen ausreichend Material zum Erhöhen des Abstands zwischen den Leiterschenkeln 51 zur Verfügung steht.

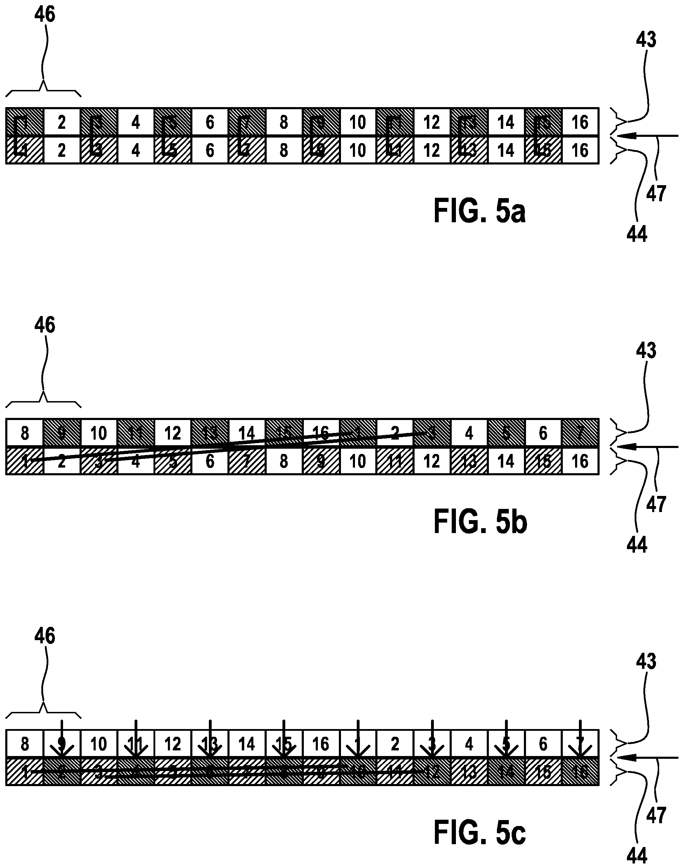

In Figur 5a ist beispielhaft anhand einer schematischen Darstellung die Bestückung des Verschränkungswerkzeugs 40 dargestellt. Zur Vereinfachung der Darstellung ist die tangentiale Anordnung der Aufnahmeöffnungen 43, 44 dargestellt, deren Aufnahmepositionen von 1 bis 16 nummeriert sind. Die oberste Reihe entspricht den ersten Aufnahmeöffnungen 43 und die unterste Reihe den zweiten Aufnahmeöffnungen 44. Die dargestellten Brücken stellen schematisch die Leiterbögen 52 der eingesetzten Formspulen 5 dar. Das hier dargestellte Bestückungsschema sieht vor, jede zweite Aufnahmeposition mit einer Formspule 5 zu versehen. Dabei entspricht die sich wiederholende Anordnung von Formspulen 5 in den Aufnahmepositionen einem Steckblock 46.
In einem nachfolgenden Schritt S2 werden die Werkzeugteile 41, 42 relativ zueinander verdreht, um den gewünschten Wicklungsschritt zu realisieren.
Im Ausführungsbeispiel der Figur 5b ist ein Wicklungsschritt von 1:10 realisiert, d. h. die Verformelemente werden um 9 Aufnahmepositionen zueinander versetzt. Die Leiterschenkel 51 der darin befindlichen Formspulen 5 werden entsprechend auseinanderbewegt und die Leiterbögen 52 entsprechend verformt. Dabei werden die Formspulen 5 miteinander geschränkt. Allgemein kann bei dem obigen Ausführungsbeispiel eines Bestückungsschemas das Verschränken um eine Anzahl von Aufnahmepositionen erfolgen, die 2 N + 1 für N = 0, 1, 2, ... entspricht. Nach dem Verschränken steht jede mit einer der Formspulen 5 bestückte Aufnahmeöffnung 43, 44 gegenüber einer leeren Aufnahmeöffnung 43, 44 des entsprechend anderen Werkzeugteils 41, 42.
Die abstehenden Enden der Formspulen 5 müssen fluchtend angeordnet werden, um diese in eine Maschinenkomponente der elektrischen Maschine 1 einsetzen zu können. Bei einem Leiterstrang 24 pro Statornut 23 müssen somit alle Abstände der sich ergebenden Leiterenden der Formspulen 5 in dem Verschränkungswerkzeug 40 konzentrisch entlang einer kreisförmigen Anordnungsspur 47 angeordnet sein. Dies wird in Schritt S3 durch ein Verschieben der Leiterschenkel 51 in eine der Aufnahmeöffnungen 43, 44 entweder radial nach innen oder radial nach außen erreicht. Das Verschieben kann mit einem entsprechend ausgelegten Werkzeug erfolgen. Das Verschieben kann sowohl in dem Verschränkwerkzeug 40 als auch in einem separaten Spannwerkzeug erfolgen. Das Ergebnis des Verschiebevorgangs ist in Figur 5c gezeigt.

In Schritt S4 wird die so geformte Wicklung für eine Maschinenkomponente aus dem Verschränkungswerkzeug 40 entnommen und in eine entsprechende Maschinenkomponente, insbesondere die Statoranordnung 2, zum Beispiel mithilfe eines Spannwerkzeugs eingesetzt.

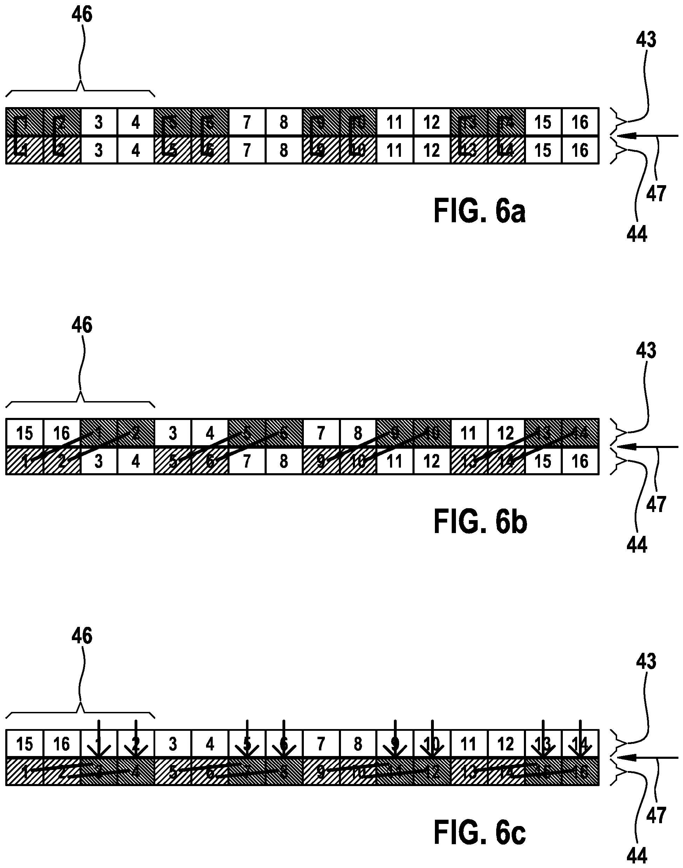

Während in der Ausführungsform der Figuren 5a bis 5c das Verschränkungswerkzeug 40 Steckblöcke 46 mit jeweils zwei Aufnahmepositionen umfasst, wobei jeweils nur jede zweite Aufnahmeposition mit einer der Formspulen 5 versehen wird, sind in der Ausführungsform der Figuren 6a bis 6c Steckblöcke 46 mit jeweils vier Aufnahmepositionen dargestellt. Jeweils zwei der Aufnahmepositionen werden dabei mit Leiterschenkeln 51 von zwei Formspulen 5 besetzt, während zwei weitere der Aufnahmepositionen unbesetzt bleiben. Die Anordnung der Steckblöcke 46 erfolgt sich wiederholend in Umfangsrichtung des Verschränkungswerkzeugs 40. Durch einen Schritt eines Verschränkens um das Ein- oder Mehrfache der Anzahl der in einem Steckblock 46 mit Formspulen 5 belegten Aufnahmepositionen kann ein Verschränken so durchgeführt werden, dass in jeder der Aufnahmeöffnungen 43, 44 ein Leiterschenkel 51 angeordnet ist, wie es in Figur 6b am Beispiel eines Verschiebens um zwei Aufnahmepositionen gezeigt ist. Wieder können, wie in Figur 6c dargestellt, durch Verschieben von Leiterschenkeln 51 in radialer Richtung diese entlang einer Anordnungsspur 47 angeordnet werden, so dass diese in Statornuten 23 einer Statoranordnung 2 eingesetzt werden können.

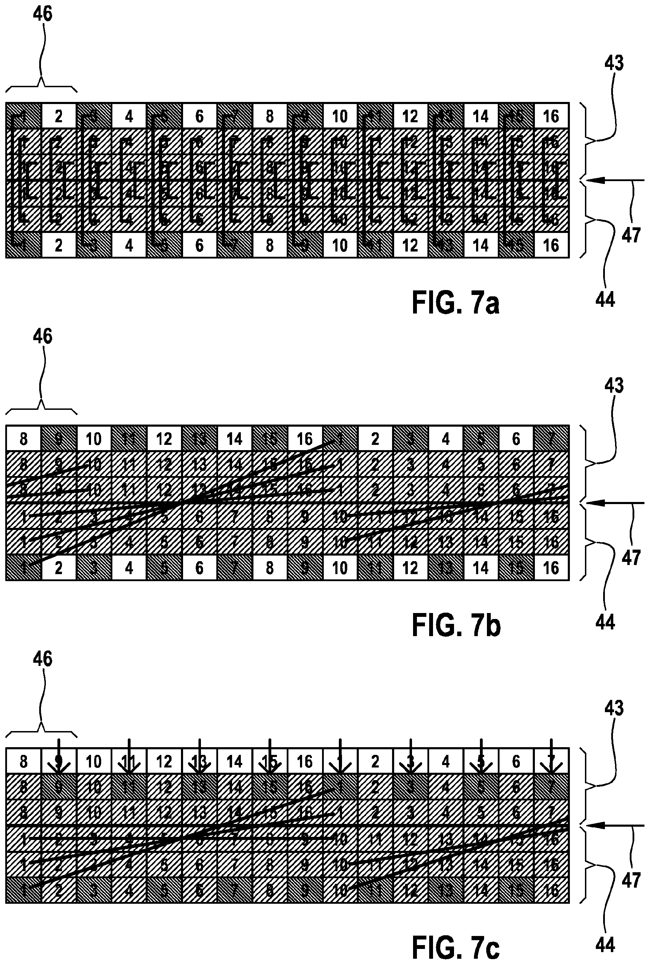

In den Figuren 7a bis 7c ist als erfindungsgemäßes Ausführungsbeispiel das Herstellen einer Wicklung mit fünf Leitersträngen 24 pro Statornut 23 dargestellt. Figur 7a zeigt die Werkzeugteile 41, 42 mit einer ersten Aufnahmeöffnung 43 des ersten Werkzeugteils 41 mit drei Aufnahmeplätzen zur Aufnahme von drei in radialer Richtung angeordneten Leiterschenkeln 51 und einer zweiten Aufnahmeöffnung 44 des zweiten Werkzeugteils 42 mit Aufnahmeplätzen zur Aufnahme von ebenfalls drei in radialer Richtung angeordneten Leiterschenkeln 51 von Formspulen 5. Im dargestellten geteilten Ausführungsbeispiel entspricht ein Steckblock 46 zwei benachbarten Aufnahmepositionen. Die Bestückung kann im Wesentlichen erfolgen, indem die Formspulen 5 an einer Aufnahmeposition einander übergreifend, d. h. sich jeweils umschließend, angeordnet sind. An einer ersten Aufnahmeposition in dem Steckblock 46 sind somit drei Formspulen 5 angeordnet, wobei eine erste Formspule 5 mit Leiterschenkeln 51 an dem jeweils äußeren Aufnahmeplatz der beiden Aufnahmeöffnungen 43, 44, eine zweite, die erste Formspule 5 umgebende Formspule 5 an dem jeweils mittigen Aufnahmeplatz der beiden Aufnahmeöffnungen 43, 44 und eine dritte, die zweite Formspule 5 umgebende Formspule 5 an dem jeweils inneren Aufnahmeplatz der beiden Aufnahmeöffnungen 43, 44 vorgesehen sind.

Eine zweite dazu benachbarte Aufnahmeposition des Steckblocks 46 umfasst lediglich zwei Formspulen 5, eine vierte innere Formspule 5 an dem jeweils äußeren Aufnahmeplatz der beiden Aufnahmeöffnungen 43, 44 mit unmittelbar benachbarten Leiterschenkeln 51 und eine fünfte, die Leiterschenkel 51 in der vierten Formspule 5 in radialer Richtung umgebenden Formspule 5 an dem jeweils mittigen Aufnahmeplatz der beiden Aufnahmeöffnungen 43, 44. Deshalb verbleibt schließlich pro Steckblock 46 eine nicht besetzte Position für eine Formspule 5 an dem jeweils äußeren Aufnahmeplatz der beiden Aufnahmeöffnungen 43, 44 der zweiten Aufnahmeposition. Durch Verschränken, d. h. durch Verschieben der ersten und zweiten Werkzeugteile 41, 42 relativ zueinander um 2 N + 1 für N = 0, 1, 2, ... Aufnahmepositionen (in dem in Figur 7b gezeigten Ausführungsbeispiel um neun Aufnahmepositionen) kann eine gewünschte Verschränkung erreicht werden. Anschließend sind in jeder Durchgangsöffnung 45 fünf Leiterschenkel 51 angeordnet. Durch Schieben der Leiterschenkel 51 in Richtung eines Nutbodens in radialer Richtung (nach innen oder nach außen) (Werkzeuglücke) kann das Ausrichten der Leiterschenkel 51 auf die Anordnungsspur 47 zum Einsetzen in die entsprechende Maschinenkomponente erreicht werden.

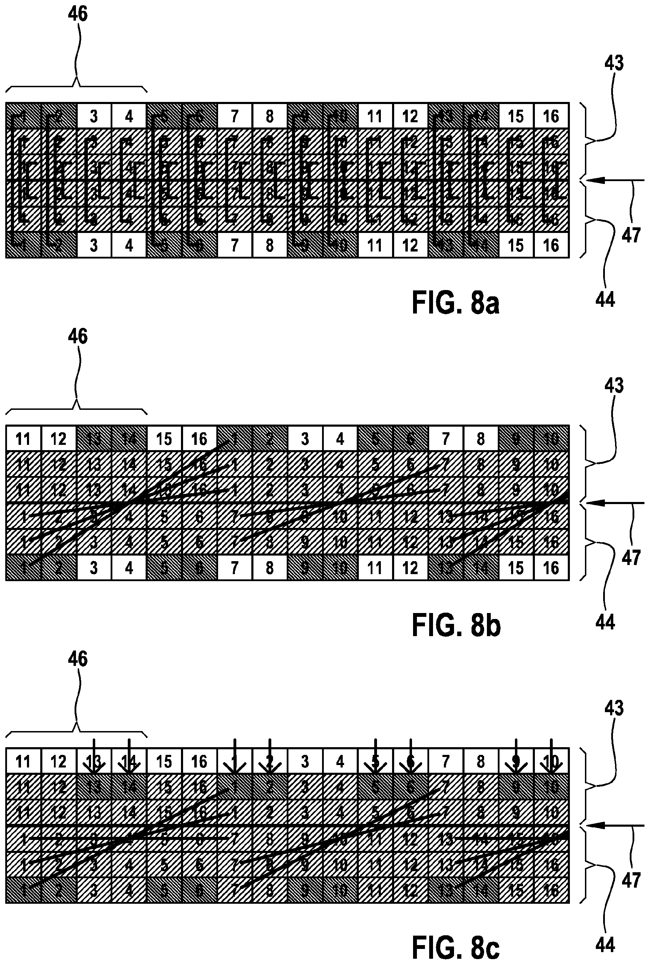

Die erfindungsgemäße Ausführungsform der Figuren 8a bis 8c zeigt analog zu der Ausführungsform der Figuren 6a bis 6c Steckblöcke 46, die sich über vier Aufnahmepositionen erstrecken, wobei zwei benachbarte erste Aufnahmepositionen und zwei benachbarte zweite Aufnahmepositionen wie bei der Ausführungsform der Figuren 6a bis 6c vorgesehen sind. Die Bestückung der Formspulen 5 erfolgt wie bezüglich der Ausführungsform der Figuren 7a bis 7c beschrieben. Das Verschränken erfolgt durch Verschiebung um 2 N für N = 1, 2, 3 Aufnahmepositionen (im vorliegenden Ausführungsbeispiel erfolgt eine Schränkung mit einem Schränkschritt 1:7, d.h. um 6 Aufnahmepositionen), so dass nach dem Verschränken jede der Durchgangsöffnungen 45 fünf Leiterschenkel 51 beinhaltet.

Es gibt grundsätzlich viele Möglichkeiten, ein Wicklungsschema mit einer ungeraden Anzahl von Leiterschenkeln 51 pro Statornut 23 herzustellen. Die Anzahl der Aufnahmepositionen pro Steckblock 46 entspricht dabei einer geraden Anzahl, wobei die Anzahl der anfänglich mit einem nicht bestückten Aufnahmeplatz (Freistelle) versehenen Aufnahmepositionen der Hälfte der Anzahl der Aufnahmepositionen entspricht.

## Patentansprüche

1. Verfahren zur Herstellung einer Wicklung für eine Maschinenkomponente, mit folgenden Schritten:
- Anordnen von mehreren im Wesentlichen U-förmigen Formspulen (5) in einem Verschränkungswerkzeug (40);
- Umformen der mehreren Formspulen (5) durch relatives Bewegen von Werkzeugteilen (41, 42) des Verschränkungswerkzeugs (40), wobei sich der Abstand von zueinander parallelen Leiterschenkeln (51) vergrößert und wobei das Umformen so erfolgt, dass Leiterschenkel (51) von verschiedenen Formspulen (5) in radialer Richtung zueinander angeordnet sind; und
- Verschieben zumindest eines Teils der radialen Anordnungen von Leiterschenkeln (51) in einer radialen Richtung, so dass alle radialen Anordnungen von Leiterschenkeln (51) ringförmig angeordnet sind, wobei
- die Formspulen (5) in nutförmigen Aufnahmeöffnungen (43, 44) in den Werkzeugteilen (41, 42) des Verschränkungswerkzeugs (40) angeordnet werden, so dass ein erster der Leiterschenkel (51) der Formspulen (5) in einer ersten Aufnahmeöffnung (43) eines ersten der Werkzeugteile (41) und ein zweiter der Leiterschenkel (51) der Formspulen (5) in einer zweiten Aufnahmeöffnung (44) eines zweiten der Werkzeugteile (42) angeordnet werden, wobei das Umformen durch Bewegen der Werkzeugteile (41, 42) durchgeführt wird, bis die nutförmigen Aufnahmeöffnungen (43, 44) einander in radialer Richtung gegenüberliegen und Durchgangsöffnungen (45) mit den darin befindlichen radialen Anordnungen der Leiterschenkel (51) ausgebildet werden, wobei
- das Verschränkungswerkzeug (40) durch Aufnahmeöffnungen (43, 44) gebildete Aufnahmepositionen mit jeweils einem oder mehreren Aufnahmeplätzen zur Aufnahme eines Leiterschenkels (51) aufweist, wobei mehrere benachbarte Aufnahmepositionen einen Steckblock (46) bilden und wobei die Steckblöcke (46) zueinander benachbart angeordnet sind, wobei in jedem Steckblock (46) Formspulen (5) in identischer Weise angeordnet werden, wobei
- jeder Steckblock (46) eine gerade Anzahl von Aufnahmepositionen umfasst, wobei bei dem Schritt des Anordnens eine erste Hälfte der Aufnahmepositionen gemäß einem ersten Bestückungsmuster mit einer ersten Anzahl von Leiterschenkeln (51) versehen werden und eine zweite sich daran anschließende Hälfte der Aufnahmepositionen gemäß einem zweiten Bestückungsmuster mit einer zweiten, im Vergleich zur ersten Anzahl geringeren Anzahl von Leiterschenkeln (51) versehen werden, wobei
- das relative Bewegen der Werkzeugteile (41, 42) des Verschränkungswerkzeugs (40) zum Umformen so durchgeführt wird, dass jede radiale Anordnung von Leiterschenkeln (51) eine ungerade Anzahl von Leiterschenkeln (51) aufweist,
**dadurch gekennzeichnet, dass**
- mindestens an einer Aufnahmeposition jedes Steckblockes mindestens ein Aufnahmeplatz unbesetzt bleibt.

2. Verfahren nach Anspruch 1, wobei bei dem Umformen Leiterbögen (52) der Formspulen (5), die sich zwischen den Leiterschenkeln (51) befinden, miteinander verschränkt werden.

3. Verfahren nach Anspruch 1, wobei das Verschieben der Formspulen (5) in den nutförmigen Aufnahmeöffnungen (43, 44) der Werkzeugteile (41, 42) des Verschränkungswerkzeugs (40) durch Ausüben von radialem Druck auf die Leiterschenkel (51) nach radial innen oder radial außen erfolgt, so dass die radialen Anordnungen der Leiterschenkel (51) an eine radial innere bzw. radial äußere Begrenzung der Durchgangsöffnung (45) gedrückt werden.

4. Verfahren zur Herstellung einer Maschinenkomponente, insbesondere einer Statoranordnung (2) oder einer Rotoranordnung (3), für eine elektrische Maschine (1), mit folgenden Schritten:
- Herstellen einer Wicklung mit einem Verfahren nach einem der Ansprüche 1 bis 3; und
- Einsetzen der so hergestellten Wicklung in die Maschinenkomponente.

## Claims

1. Method for producing a winding for a machine component, comprising the following steps:
- arranging a plurality of substantially U-shaped preformed coils (5) in an interlacing tool (40);
- shaping the plurality of preformed coils (5) by relative movement of tool parts (41, 42) of the interlacing tool (40), wherein the spacing of mutually parallel conductor legs (51) is increased and wherein the shaping occurs in such a way that conductor legs (51) of different preformed coils (5) are arranged in the radial direction with respect to one another; and
- displacing at least a part of the radial arrangements of conductor legs (51) in a radial direction such that all the radial arrangements of conductor legs (51) are arranged in a ring shape, wherein
- the preformed coils (5) are arranged in groove-shaped receiving openings (43, 44) in the tool parts (41, 42) of the interlacing tool (40) such that a first of the conductor legs (51) of the preformed coils (5) is arranged in a first receiving opening (43) of a first of the tool parts (41), and a second of the conductor legs (51) of the preformed coils (5) is arranged in a second receiving opening (44) of a second of the tool parts (42), wherein the shaping is carried out by moving the tool parts (41, 42) until the groove-shaped receiving openings (43, 44) are situated opposite one another in the radial direction and through-openings (45) with the radial arrangements of the conductor legs (51) situated therein are formed, wherein
- the interlacing tool (40) has receiving positions which are formed by receiving openings (43, 44) and which each have one or more receiving places for receiving a conductor leg (51), wherein a plurality of adjacent receiving positions form a plug-in block (46), and wherein the plug-in blocks (46) are arranged adjacent to one another, wherein preformed coils (5) are arranged in an identical manner in each plug-in block (46), wherein
- each plug-in block (46) comprises an even number of receiving positions, wherein, in the step of arranging, a first half of the receiving positions is provided with a first number of conductor legs (51) according to a first fitting pattern, and a second, adjoining half of the receiving positions is provided with a second number of conductor legs (51), which is smaller than the first number, according to a second fitting pattern, wherein
- the relative movement of the tool parts (41, 42) of the interlacing tool (40) for shaping is carried out in such a way that each radial arrangement of conductor legs (51) has an uneven number of conductor legs (51),
**characterized in that**
- at least one receiving place remains unoccupied at least at one receiving position of each plug-in block.

2. Method according to Claim 1, wherein conductor bows (52) of the preformed coils (5) that are situated between the conductor legs (51) are interlaced with one another during the shaping operation.

3. Method according to Claim 1, wherein the displacement of the preformed coils (5) in the groove-shaped receiving openings (43, 44) of the tool parts (41, 42) of the interlacing tool (40) occurs by exerting radial pressure on the conductor legs (51) radially inwardly or radially outwardly, with the result that the radial arrangements of the conductor legs (51) are pressed onto a radially inner or radially outer boundary of the through-opening (45).

4. Method for producing a machine component, in particular a stator arrangement (2) or a rotor arrangement (3) for an electric machine (1), comprising the following steps:
- producing a winding by a method according to one of Claims 1 to 3; and
- inserting the winding thus produced into the machine component.

## Revendications

1. Procédé de fabrication d'un enroulement pour un composant de machine, comprenant les étapes suivantes :
- agencement de plusieurs bobines formées essentiellement en forme de U (5) dans un outil d'entrelacement (40) ;
- mise en forme de la pluralité de bobines formées (5) par un déplacement relatif de pièces d'outil (41, 42) de l'outil d'entrelacement (40), la distance entre des branches de conducteur parallèles l'une à l'autre (51) étant augmentée et la mise en forme s'effectuant de telle sorte que des branches de conducteur (51) de différentes bobines formées (5) soient disposées dans la direction radiale les unes par rapport aux autres; et
- déplacement d'au moins une partie des agencements radiaux de branches de conducteur (51) dans une direction radiale de telle sorte que tous les agencements radiaux de branches de conducteur (51) soient disposés sous forme annulaire,
- les bobines formées (5) étant disposées dans des ouvertures de réception en forme de rainure (43, 44) dans les pièces d'outil (41, 42) de l'outil d'entrelacement (40) de telle sorte qu'une première des branches de conducteur (51) des bobines formées (5) soit disposée dans une première ouverture de réception (43) d'une première des pièces d'outil (41) et qu'une deuxième des branches de conducteur (51) des bobines formées (5) soit disposée dans une deuxième ouverture de réception (44) d'une deuxième des pièces d'outil (42), la mise en forme étant effectuée par déplacement des pièces d'outil (41, 42) jusqu'à ce que les ouvertures de réception en forme de rainure (43, 44) soient mutuellement opposées dans la direction radiale et que des ouvertures de passage (45) soient réalisées avec les agencements radiaux des branches de conducteur (51) se trouvant à l'intérieur de celles-ci,
- l'outil d'entrelacement (40) présentant des positions de réception formées par des ouvertures de réception (43, 44) avec à chaque fois une ou plusieurs places de réception pour recevoir une branche de conducteur (51), plusieurs positions de réception adjacentes formant un bloc enfichable (46) et les blocs enfichables (46) étant disposés les uns à côté des autres, des bobines formées (5) étant disposées de manière identique dans chaque bloc enfichable (46),
- chaque bloc enfichable (46) comprenant un nombre pair de positions de réception, et dans l'étape d'agencement, une première moitié des positions de réception étant pourvue d'un premier nombre de branches de conducteur (51), selon un premier motif d'agencement, et une deuxième moitié de positions de réception s'y raccordant, étant pourvue d'un deuxième nombre de branches de conducteur (51) inférieur au premier nombre, selon un deuxième motif d'agencement,
- le déplacement relatif des pièces d'outil (41, 42) de l'outil d'entrelacement (40) pour la mise en forme étant réalisé de telle sorte que chaque agencement radial de branches de conducteur (51) présente un nombre impair de branches de conducteur (51),
**caractérisé en ce**
- **qu'**au moins une place de réception reste non occupée au moins au niveau d'une position de réception de chaque bloc enfichable.

2. Procédé selon la revendication 1, dans lequel, lors de l'opération de mise en forme, des arcs conducteurs (52) des bobines formées (5), qui se trouvent entre les branches de conducteur (51), sont entrelacés les uns avec les autres.

3. Procédé selon la revendication 1, dans lequel le déplacement des bobines formées (5) dans les ouvertures de réception en forme de rainure (43, 44) des pièces d'outil (41, 42) de l'outil d'entrelacement (40) s'effectue en exerçant une pression radiale sur les branches de conducteur (51) radialement vers l'intérieur ou radialement vers l'extérieur, de telle sorte que les agencements radiaux des branches de conducteur (51) soient pressés contre une limitation radialement intérieure ou radialement extérieure de l'ouverture de passage (45).

4. Procédé de fabrication d'un composant de machine, en particulier d'un agencement de stator (2) ou d'un agencement de rotor (3) pour une machine électrique (1), comprenant les étapes suivantes :
- fabrication d'un enroulement avec un procédé selon l'une quelconque des revendications 1 à 3 ; et
- insertion de l'enroulement ainsi fabriqué dans le composant de machine.
